# FASCICULE DE BREVET EUROPEEN

(11) **EP 0 524 095 B1**
(45) Date de publication et mention de la délivrance du brevet: **17.01.1996**
(21) Numéro de dépôt: 92402051.4
(22) Date de dépôt: 16.07.1992
(51) Int. Cl.: G21C 7/107

(54) **Dispositif de surveillance du flux neutronique d'un réacteur nucléaire**
Neutronenflussüberwachungsvorrichtung für Kernreaktor
Nuclear reactor neutron flux monitoring device

(30) Priorité: 18.07.1991 FR 9109083
(43) Date de publication de la demande: 20.01.1993
(73) Titulaire: COMMISSARIAT A L'ENERGIE ATOMIQUE, F-75015 Paris (FR)
(72) Inventeur: Bacconnet, Eugène, F-91460 Marcoussis (FR)
(74) Mandataire: Dubois-Chabert, Guy

(56) Documents cités:
- EP-A- 0 346 170
- FR-A- 2 268 353
- IEEE TRANSACTIONS ON NUCLEAR SCIENCE. vol. NS, no. 1, 17 Février 1970, NEW YORK, US, pages 572 - 580 L.M. JOHNSON ET AL.: 'A two-range system for excore neutron flux monitoring'
- ONDE ELECTRIQUE. vol. 67, no. 2, Mars 1987, PARIS ,FR, pages 81 - 94, J. DUCHENE ET AL.: 'Les mesures hors coeur dans les réacteurs à eau pressurisées 1300 MWe du type Paluel'

## Description

La présente invention se rapporte d'une façon générale à la surveillance du flux neutronique présent au voisinage immédiat du coeur d'un réacteur nucléaire en fonctionnement et elle concerne plus particulièrement le choix des détecteurs neutroniques appropriés et leurs dispositions par rapport au coeur du réacteur.

On commencera d'abord par rappeler l'état de la technique connue en ce domaine en se référant à des réacteurs du type REP (Réacteurs à Eau Pressurisée) d'une puissance de 1300 MW tels que par exemple les réacteurs que l'on trouve à la centrale française de PALUEL.

La détection et la surveillance du flux neutronique au voisinage d'un réacteur nucléaire impliquent, pour que les résultats obtenus soient significatifs, que cette surveillance ait lieu selon différentes directions azimutales par rapport à l'axe vertical du réacteur et également selon la hauteur de celui-ci de façon à pouvoir dresser la carte du flux en trois dimensions.

A cet effet, de façon classique, les appareils détecteurs sont placés au voisinage immédiat de la cuve métallique contenant les éléments combustibles du coeur et insérés dans des puits verticaux parallèles à l'axe du réacteur ménagés dans le béton de protection biologique de ce réacteur.

Dans l'art connu, les instruments de mesure du flux neutronique sont couramment désignés sous le nom de chaînes, une chaîne désignant l'ensemble d'un détecteur de neutrons, de son électronique d'accompagnement et des dispositifs de connectique permettant de le relier aux instruments d'enregistrement extérieurs au réacteur.

De façon également traditionnelle, on fait appel pour couvrir la gamme complète des fluences neutroniques qui s'étend sur plusieurs décades, de façon courante par exemple de 1 à 10¹¹ neutrons par cm et par seconde, à plusieurs types de détecteurs neutroniques dont chacun est spécialisé dans une partie de la gamme précédente. C'est ainsi qu'il est connu de couvrir une telle gamme de mesure de fluences neutroniques en utilisant trois types différents de chaînes de mesures utilisant chacun l'un des trois détecteurs. Pour les basses puissances et notamment le démarrage du réacteur, on utilise des chaînes "source" équipées de compteurs proportionnels fonctionnant en impulsions ; pour les puissances moyennes, on utilise des chaînes dites "intermédiaires" équipées de chambres d'ionisation à bore compensé vis-à-vis du rayonnement gamma et pour le fonctionnement à puissance nominale, des chaînes dites "de puissance" équipées de chambres d'ionisation à bore non compensé. Ces dernières sont généralement, et c'est le cas dans les réacteurs du type REP de 1300 MW construits par la Société FRAMATOME et équipés par la Société MERLIN-GERIN, à plusieurs étages et comportent six sections qui sont réparties dans un même puits sur toute la hauteur du réacteur.

On va décrire ci-après en se référant aux figures schématiques 1 et 2 le mode d'implantation de chaînes de détection neutronique dans un réacteur REP de 1300 MW.

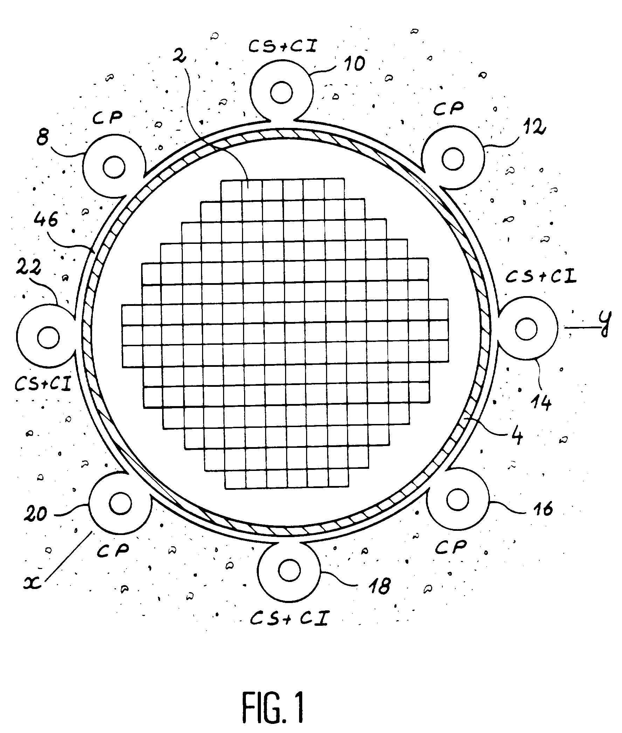

Sur la figure 1, on a représenté en coupe selon l'axe le coeur 2 d'un réacteur contenu dans la cuve 4. Dans le béton de protection biologique 6 se trouvent situés huit puits verticaux référencés respectivement 8, 10, 12, 14, 16, 18, 20 et 22 au voisinage immédiat de la cuve 4 et contenant des chaînes de mesure neutronique réparties de la façon suivante.

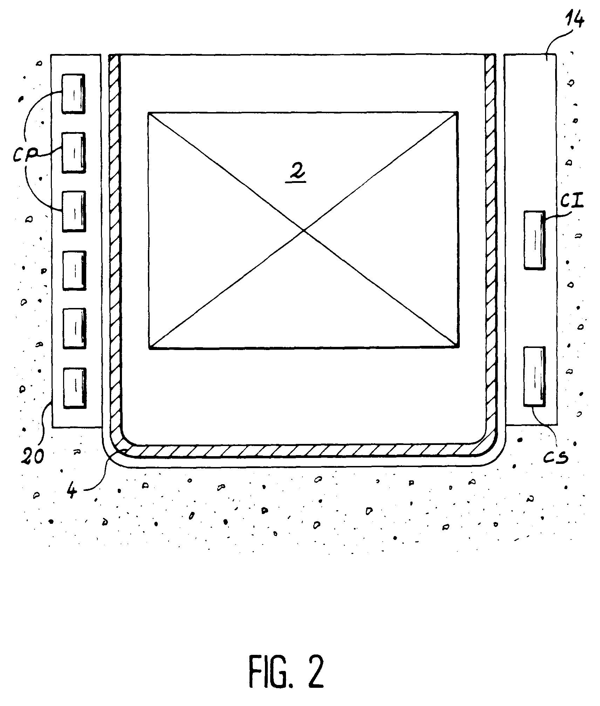

Les puits 10, 14, 18 et 22 contiennent une chaîne "source" et une chaîne "intermédiaire" alors que les puits 8, 12, 16 et 20 contiennent des chaînes "de puissance". La figure 2 qui est une vue schématique en coupe élévation selon la ligne XY de la figure 1 montre la disposition des chaînes "source" (CS) et "intermédiaires" (CI) dans le puits 14 et la constitution très particulière en six sections juxtaposées selon la hauteur de la chaîne "de puissance" (CP) dans le puits 20.

Un tel état de l'art connu est décrit notamment dans l'article "Les mesures hors coeur dans les réacteurs à eau pressurisée de 1300 MW du type PALUEL" par Messieurs DUCHENE, BUREL et TIXIER, publié dans l'Onde Electrique de mars 1987, vol. 67, n° 2.

L'art antérieur tel qu'il vient d'être décrit conduit à un certain nombre d'inconvénients que la présente invention permet précisément d'éviter. Parmi ces inconvénients, on peut citer le suivant :
- le fait que les deux chaînes des puits tels que 14 à savoir la chaîne "intermédiaire" et la chaîne "source" sont disposées l'une au-dessus de l'autre dans un même puits et le fait que les six sections d'une chaîne "de puissance" sont également réparties et interconnectées l'une au-dessus de l'autre dans un même puits impliquent qu'en cas de panne de l'une des chaînes, on démonte pratiquement l'ensemble des détecteurs d'un même puits, ce qui est une opération délicate, ne pouvant se faire qu'à l'arrêt du réacteur et nécessitant par conséquent le remplacement de l'ensemble des chaînes ou des éléments de chaînes alors même que tous ne sont pas endommagés. C'est dire que la maintenance d'une telle installation est particulièrement coûteuse.

Un autre inconvénient de l'art antérieur réside dans le nombre relativement élevé de puits ménagés dans le béton qui sont nécessaires à une surveillance complète de la fluence neutronique, le plus souvent égal à huit.

Un autre inconvénient résulte enfin de la nécessité d'utiliser parallèlement trois types de détecteurs neutroniques ce qui complique la fabrication et la maintenance de l'ensemble.

La présente invention a précisément pour objet un dispositif de surveillance du flux neutronique d'un réacteur nucléaire qui permet de s'affranchir des inconvénients précédents tout en conservant strictement les mêmes qualités de mesure neutronique.

Ce dispositif de surveillance du flux neutronique d'un réacteur nucléaire situé dans le béton de protection biologique entourant la cuve contenant le coeur du réacteur et comportant, dans des puits verticaux ménagés dans le béton au voisinage de cette cuve, un certain nombre d'appareils détecteurs de neutrons, chacun étant associé sous forme d'ensembles ou chaînes à son électronique et à sa connectique, les chaînes étant de trois types différents pour couvrir une gamme de fluence neutronique s'étendant sur plusieurs décades, à savoir des chaînes "source" pour les faibles puissances du réacteur, des chaînes "intermédiaires" pour les puissances moyennes et des chaînes "de puissance" pour le fonctionnement du réacteur à puissance élevée, se caractérise en ce que les trois types de chaînes sont constitués à l'aide de détecteurs, dont un au moins est une chambre à fission pouvant fonctionner en impulsions, en fluctuations ou en courant, en ce que tous les puits sont équipés de détecteurs de neutrons identiques, à savoir pour chacun d'eux un détecteur sensible et un certain nombre de chambres à fission réparties sur la hauteur du réacteur, chaque détecteur étant situé dans un tube s'étendant sur la hauteur du puits et débouchant à l'extérieur du réacteur pour permettre son introduction et/ou son retrait indépendamment des autres détecteurs.

De préférence, les trois types de chaînes sont constitués à l'aide de deux types de détecteurs, à savoir un compteur proportionnel à dépôt de bore pour la chaîne "source" et ladite chambre à fission pour les chaînes "intermédiaires" et "de puissance".

On voit donc que conformément à l'invention, les différents détecteurs de neutrons utilisés sont situés chacun dans un tube métallique transparent aux neutrons et ouvert à l'extérieur du réacteur ce qui résout simplement le problème de la maintenance en cas de défection d'un détecteur puisque cette disposition permet l'introduction et/ou le retrait des détecteurs endommagés un par un. C'est déjà un premier avantage très important par rapport à l'art antérieur.

De plus, l'invention met en oeuvre une technique déjà connue notamment du document US-A-4 634 568 selon laquelle il est possible d'utiliser dans une large plage de fluences neutroniques une même chambre d'ionisation du type à fission en faisant varier simplement son mode de fonctionnement. C'est ainsi que l'on constitue les détecteurs de chaînes "intermédiaires" et des chaînes "de puissance" à l'aide d'un seul type de chambre à fission pouvant fonctionner selon trois modes différents à savoir le mode en impulsions, le mode en fluctuations et le mode en courant, la chaîne "source" étant normalement constituée par un compteur proportionnel à dépôt de bore comme c'était le cas dans l'art antérieur.

En particulier, le détecteur à forte sensibilité, utilisé dans la chaîne "source" peut être un compteur à BF₃, un compteur à hélium 3 et même éventuellement une chambre à fission de grande sensibilité, fonctionnant en impulsions.

A titre d'indication par exemple, les chaînes "source" sont susceptibles de couvrir la gamme de fluences neutroniques s'élevant de 1 à 10⁵ neutrons par centimètre carré et par seconde et les chaînes "intermédiaires" et "de puissance" sont réalisées par un seul et même type de chambre à fission qui couvre en mode à impulsions la gamme 10-5.10⁷ neutrons par centimètre carré et par seconde, en mode fluctuations la gamme 10⁶ à 10¹⁰ neutrons par centimètres carré et par seconde et en mode courant, la gamme 10⁸ à 10¹¹ neutrons par centimètre carré et par seconde. On réalise ainsi l'objectif recherché de diminution du nombre de types de détecteurs neutroniques nécessaires pour réaliser la surveillance générale du réacteur.

Enfin, le fait que dans chaque puits se trouvent situés les trois types de chaînes "source", "intermédiaires" et "de puissance" permet de réduire le nombre de puits ménagés dans le béton de protection biologique autour de la cuve du réacteur. Pratiquement, il suffit de quatre de ces puits évidemment répartis à 90° les uns des autres pour obtenir une qualité d'information équivalente à celle que l'on obtenait avec les huits puits de l'art antérieur.

Selon un mode de mise en oeuvre de l'invention particulièrement intéressant, chaque puits est équipé d'un tube de logement central en aluminium et de plusieurs tubes périphériques également en aluminium, le tube central étant réservé au logement du compteur proportionnel à dépôt de bore et les tubes périphériques au logement des chambres à fission maintenues chacune à une hauteur différente par des moyens de support liés aux tubes.

De façon plus précise encore, les chambres à fission sont au nombre de six, réparties sur la hauteur du réacteur, chacune dans l'un des six tubes périphériques selon une disposition spatiale en hélice autour de l'axe du tube central. Cette répartition en hélice autour de l'axe de l'ensemble des six chambres à fission réparties sur la hauteur du réacteur permet de surveiller l'évolution de la fluence neutronique sur la hauteur du réacteur pour les puissances intermédiaires et nominales de ce dernier.

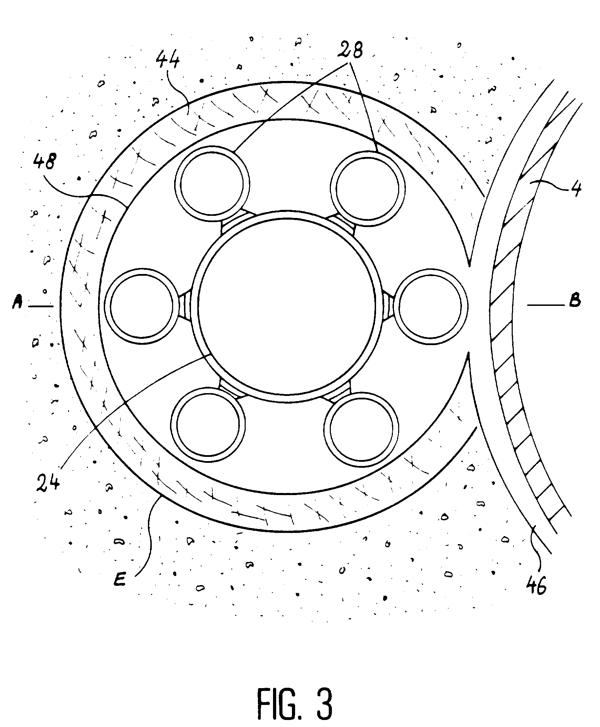

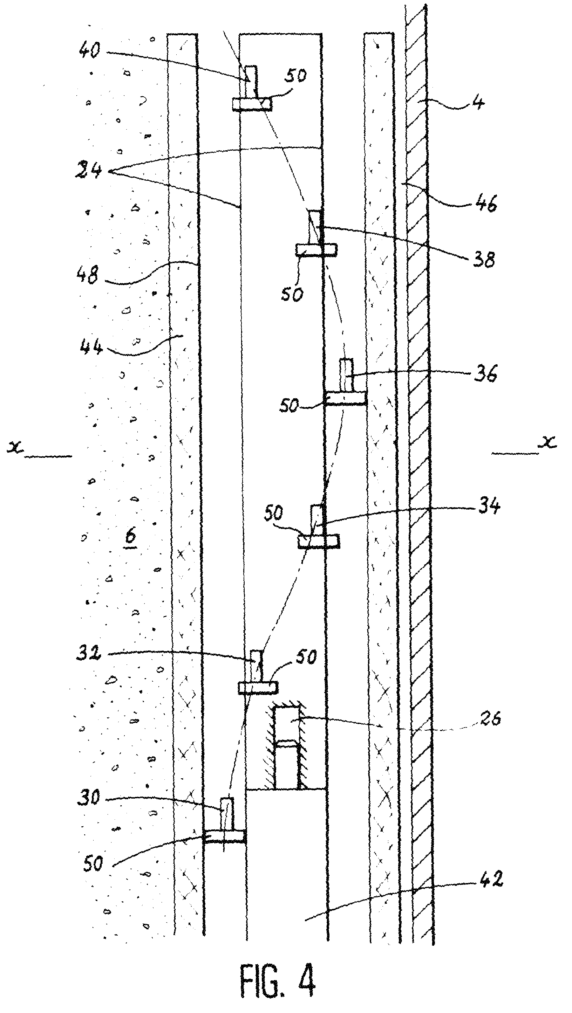

De toute façon l'invention sera mieux comprise en se référant à la description qui suit d'un exemple de réalisation donné à titre illustratif et non limitatif en se référant aux figures 3 et 4, sur lesquelles :
- la figure 3 qui est une coupe selon le plan horizontal X-X de la figure 4, montre un exemple particulier de disposition des tubes de logement des détecteurs de neutrons dans l'un des puits ménagé dans le béton ;
- la figure 4 qui est une coupe verticale selon la ligne A-B de la figure 3 montre en élévation la structure d'implantation des tubes d'aluminium dans l'un des puits de la structure de béton.

Dans le mode de mise en oeuvre particulier de la figure 3, on a représenté le tube central 24 d'une structure de logement de détecteurs, ce tube 24 étant destiné à contenir un compteur proportionnel à dépôt de bore que l'on voit référencé 26 sur la figure 4 et qui constitue la chaîne "source" du puits considéré. Autour de la tubulure centrale 24 sont réparties, dans l'exemple décrit, six tubulures périphériques telles que 28, toutes en aluminium comme la tubulure 24 et dont chacune renferme l'une des six chambres à fission référencées 30, 32, 34, 36, 38 et 40 sur la figure 4. Conformément à l'invention, le compteur à dépôt de bore 26 de la chaîne "source" est situé de préférence entre les deux chambres à fission inférieures 30 et 32 sur une console 42 située dans le fond du canal central. Cette disposition qui est préférentielle n'est toutefois pas limitative et l'on pourrait aussi bien envisager dans d'autres exemples de situer ce compteur à dépôt de bore 26 à toute autre altitude dans la tubulure 24 pourvu toutefois qu'il se situe entre deux chambres à fission de manière que celles-ci ne fassent pas écran neutronique vis-à-vis du compteur 26. A la périphérie des tubes périphériques est située une couche de polyéthylène 44 faisant fonction de ralentisseur et de collimateur pour le flux neutronique, ladite couche 44 comprenant également une charge de cadmium jouant le rôle de focalisateur (comme décrit dans l'article précité de l'Onde Electrique).

Sur la figure 4, la coupe du dispositif de la figure 3 permet de voir la cuve 4 du réacteur, l'espace vide 46 entre cette cuve et le béton de protection biologique 6, la structure de maintien des détecteurs neutroniques étant précisément située dans l'espace 46 ménagé dans ce béton 6. On voit également la tubulure 48 qui enveloppe les tubes périphériques 28 au voisinage de la couche 44 constituant le ralentisseur en polyéthylène avec focalisateur en cadmium. Sur cette même figure 4, on voit que les différentes chambres à fission 30 à 40 sont fixées sur des butées de positionnement 50 qui peuvent être constituées de toute façon connue. Comme on l'aura compris de ce qui précède, chacune des chambres à fission 30, 32, 34, 36, 38 et 40 est fixée dans l'un des tubes périphériques 28 avec un décalage en hauteur d'une chambre à l'autre de façon à couvrir le flux de neutrons issu sur toute la hauteur du réacteur.

Ces chambres à fission sont prévues conformément à l'invention pour travailler selon trois modes différents à savoir le mode en impulsions, le mode en fluctuations et le mode en courant qui conduisent ainsi à les spécialiser dans une gamme déterminée de fluences neutroniques comme déjà expliqué précédemment. La commutation d'un mode de fonctionnement des chambres à fission à un autre mode se fait de manière manuelle ou automatique et fait partie du savoir faire de l'homme de métier.

Comme il résulte de l'ensemble de la description qui précède, chaque détecteur neutronique est indépendant des autres et peut être introduit ou retiré séparément, ce qui fait qu'un défaut sur l'un d'entre eux ne nécessite que le remplacement de l'élément défectueux et non des six sections dans le cas des chaînes "de puissance" ou du compteur proportionnel et de la chambre à dépôt de bore compensé dans le cas des chaînes "source" et "intermédiaires" de l'art antérieur.

Par ailleurs, les chambres à fission à plusieurs modes de fonctionnement utilisées comme détecteurs sont notablement plus robustes que les chambres d'ionisation à bore ce qui augmente leur durée de vie et la sûreté de fonctionnement des détecteurs.

Enfin, dans les structures conformes à l'invention, chaque puits comportant l'ensemble des trois chaînes "source", "intermédiaires" et "de puissance", on peut se contenter de quatre de ces puits répartis à 90° autour de la cuve du réacteur au lieu des huit puits nécessaires dans l'art antérieur en raison de la répartition de ces derniers en deux types différents. Ceci est un avantage très important car les puits ménagés dans le béton sont des structures de construction coûteuse et diminuent d'une façon non négligeable la protection biologique de ce même béton.

Enfin, conformément à l'invention, on aura compris que l'essentiel pour la structure de mise en place des détecteurs est qu'elle soit constituée de tubes unitaires débouchant à l'extérieur du réacteur pour l'introduction ou le retrait des détecteurs. Dans la plupart des cas, il paraîtra naturel de faire déboucher ces tubes sur la dalle supérieure couvrant le réacteur mais il n'est pas exclu que dans certains modes de mise en oeuvre ces mêmes tubes débouchent sous le réacteur ce qui signifierait alors que les détecteurs y sont introduits par le fond de la structure en béton.

D'autre part, les tubes de logement des détecteurs peuvent être éventuellement en zirconium ou l'un de ses alliages, tels que le zircaloy, ou en un matériau inoxydable tel que l'acier.

## Revendications

1. Dispositif de surveillance du flux neutronique d'un réacteur nucléaire situé dans le béton de protection biologique (6) entourant la cuve (4) contenant le coeur (2) du réacteur et comportant, dans des puits verticaux (8-22) ménagés dans le béton au voisinage de cette cuve (4), un certain nombre d'appareils détecteurs de neutrons, chacun étant associé sous forme d'ensembles ou chaînes à son électronique et à sa connectique, les chaînes étant de trois types différents pour couvrir une gamme de fluence neutronique s'étendant sur plusieurs décades, à savoir des chaînes "source" pour les faibles puissances du réacteur, des chaînes "intermédiaires" pour les puissances moyennes et des chaînes "de puissance" pour le fonctionnement du réacteur à puissance élevée, caractérisé en ce que les trois types de chaînes sont constitués à l'aide de détecteurs, dont un au moins est une chambre à fission (50) pouvant fonctionner en impulsions, en fluctuations ou en courant, en ce que tous les puits sont équipés de détecteurs de neutrons identiques, à savoir pour chacun d'eux un détecteur sensible (26) et un certain nombre de chambres à fission (50) réparties sur la hauteur du réacteur, chaque détecteur étant situé dans un tube (24, 28) s'étendant sur la hauteur du puits et débouchant à l'extérieur du réacteur pour permettre son introduction et/ou son retrait indépendamment des autres détecteurs.

2. Dispositif de surveillance du flux neutronique selon la revendication 1, caractérisé en ce que les trois types de chaînes sont constitués à l'aide de deux types de détecteurs, à savoir un compteur proportionnel pour la chaîne "source" et ladite chambre à fission pour les chaînes "intermédiaires" et "de puissance".

3. Dispositif de surveillance de flux neutronique selon la revendication 2, caractérisé en ce que ledit compteur proportionnel est un compteur à dépôt de bore.

4. Dispositif de surveillance du flux neutronique selon l'une au moins des revendications 1 à 3, caractérisé en ce que chaque puits est équipé d'un tube de logement central (24) et de plusieurs tubes de logements périphériques (28), le tube central (24) étant réservé au logement du détecteur sensible et les tubes périphériques au logement des chambres à fission maintenues chacune à une hauteur différente par des moyens de support liés aux tubes.

5. Dispositif de surveillance de flux neutronique selon la revendication 4, caractérisé en ce que l'un au moins des tubes de logement est en aluminium.

6. Dispositif de surveillance de flux neutronique selon la revendication 4, caractérisé en ce que les chambres à fission (50) sont au nombre de six réparties sur la hauteur du réacteur chacune dans l'un des six tubes périphériques (28) selon une disposition spatiale en hélice autour de l'axe du tube central (24).

## Patentansprüche

1. Neutronenflußüberwachungsvorrichtung für Kernreaktor, in dem Beton des Hohlraumschutzes befindlich, der den den Reaktorkern (2) enthaltenden Behälter (4) umgibt und umfassend, in vertikalen Schächten (8-22), vorgesehen in dem Beton nahe diesem Behälter (4), eine bestimmte Anzahl Neutronendetektionsgeräte, von denen jedes in Form von Einheiten oder Ketten seiner Elektronik und seinen Anschlüssen zugeordnet ist, wobei die Ketten, um einen Neutronenfluenzbereich zu decken, der sich über mehrere Dekaden erstreckt, drei verschiedene Typen aufweisen, nämlich "Quellenketten" für die schwachen Leistungen des Reaktors, "Zwischenketten" für die mittleren Leistungen und "Leistungsketten" für den Reaktorbetrieb mit hohen Leistungen,
**dadurch gekennzeichnet**,
daß die drei Typen von Ketten gebildet werden mit Hilfe von Detektoren, von denen wenigstens einer eine Fissionskammer (50) ist, die mittels Impulsen, Schwankungen oder Strom funktionieren kann, dadurch, daß alle Schächte mit identischen Neutronendetektoren ausgerüstet sind, nämlich jeder von ihnen mit einem empfindlichen Detektor (26) und einer bestimmten Anzahl Fissionskammern (50), verteilt über die Höhe des Reaktors, wobei jeder Detektor sich in einem Rohr (24, 28) befindet, das sich über die Höhe der Schächte erstreckt und außerhalb des Reaktors mündet, um sein Einführen und/oder sein Herausnehmen zu ermöglichen, unabhängig von den anderen Detektoren.

2. Neutronenflußüberwachungsvorrichtung nach Anspruch 1, dadurch gekennzeichnet, daß die drei Typen von Ketten gebildet werden mit Hilfe von zwei Typen von Detektoren, nämlich einem Proportionalzähler für die "Quellenkette" und der genannten Fissionskammer für die "Zwischen"- und "Leistungsketten".

3. Neutronenflußüberwachungsvorrichtung nach Anspruch 2, dadurch gekennzeichnet, daß der genannte Proportionalzähler ein Bor-Niederschlag-Zähler ist.

4. Neutronenflußüberwachungsvorrichtung nach wenigstens einem der Ansprüche 1 bis 3, dadurch gekennzeichnet, daß jeder Schacht mit einem zentralen Aufnahmerohr (24) ausgestattet ist und mit mehreren peripheren Aufnahmerohren (28), wobei das zentrale Rohr (24) reserviert ist für die Aufnahme des empfindlichen Detektors und die peripheren Rohre für die Aufnahme der Fissionskammern, jede auf einer anderen Höhe festgehalten durch Trägereinrichtungen, die mit den Rohren verbunden sind.

5. Neutronenflußüberwachungsvorrichtung nach Anspruch 4, dadurch gekennzeichnet, daß wenigstens eines der Aufnahmerohre aus Aluminium ist.

6. Neutronenflußüberwachungsvorrichtung nach Anspruch 4, dadurch gekennzeichnet, daß die Fissionskammern (50) sechs an der Zahl sind, verteilt über die Höhe des Reaktors, jede in einem der sechs peripheren Rohre (28) entsprechend einer spiralförmigen räumlichen Anordnung um die Achse des Zentralrohrs (24) herum.

## Claims

1. Apparatus for monitoring the neutron flux of a nuclear reactor located in the biological protection concrete (6) surrounding the vessel (4) containing the reactor core (2) and having, in vertical shafts (8 to 22) located in the concrete in the vicinity of said vessel (4), a certain number of neutron detectors, each being associated in the form of assemblies, cascades or chains with electronics and connections, the chains being of three different types in order to cover a neutron fluence range extending over several decades, namely "source" chains for the low reactor power levels, "intermediate" chains for the medium power levels and "power" chains when the reactor is operating at high power, characterized in that the three chain types are formed with the aid of detectors, whereof at least one is a fission chamber (50) able to operate in the pulse mode, fluctuation mode or current mode, in that all the shafts are equipped with identical neutron detectors, namely for each of them a sensitive detector (26) and a certain number of fission chambers (50) distributed over the reactor height, each detector being located in a tube (24,28) extending over the shaft height and issuing outside the reactor to permit its introduction and/or removal independently of the other detectors.

2. Neutron flux monitoring apparatus according to claim 1, characterized in that the three chain types are formed with the aid of two detector types, namely a proportional counter for the "source" chain and the fission chamber for the "intermediate" and "power" chains.

3. Neutron flux monitoring apparatus according to claim 2, characterized in that the proportional counter is a boron deposit counter.

4. Neutron flux monitoring apparatus according to at least one of the claims 1 to 3, characterized in that each shaft is equipped with a central housing tube (24) and several peripheral housing tubes (28), the central tube (24) being reserved for the housing of the sensitive detector and the peripheral tubes for the housing of the fission chamber, each maintained at a different height by support means connected to the tubes.

5. Neutron flux monitoring apparatus according to claim 4, characterized in that at least one of the housing tubes is made from aluminium.

6. Neutron flux monitoring apparatus according to claim 4, characterized in that there are six fission chambers (50) distributed over the reactor height, each being located in one of the six peripheral tubes (28) in accordance with a spatial, three- dimensional arrangement around the axis of the central tube (24).
